(19) Europäisches Patentamt
European Patent Office
Office européen des brevets

(11) **EP 4 002 849 A1**

(12) **EUROPEAN PATENT APPLICATION**
published in accordance with Art. 153(4) EPC

(43) Date of publication:
**25.05.2022 Bulletin 2022/21**

(21) Application number: **20907590.2**

(22) Date of filing: **25.11.2020**

(51) International Patent Classification (IPC):
**H04N 19/70** *(2014.01)*

(52) Cooperative Patent Classification (CPC):
**H04N 19/126; H04N 19/186; H04N 19/70**

(86) International application number:
**PCT/JP2020/043745**

(87) International publication number:
**WO 2021/131463 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2019 JP 2019237290**

(71) Applicant: **KDDI Corporation**
**Tokyo 163-8003 (JP)**

(72) Inventors:
• **KAWAMURA, Kei**
**Fujimino-shi, Saitama 356-8502 (JP)**
• **NAITO, Sei**
**Fujimino-shi, Saitama 356-8502 (JP)**

(74) Representative: **Fink Numrich**
**Patentanwälte PartmbB**
**European Patent and Trademark Attorneys**
**Wendl-Dietrich-Straße 14**
**80634 München (DE)**

(54) **IMAGE DECODING DEVICE, IMAGE DECODING METHOD, AND PROGRAM**

(57) An image decoding device 200 includes: a chroma quantization parameter (QP) offset initialization unit 104A configured to initialize a chroma QP offset based on a result of decoding coded data; a chroma QP offset deriving unit 104B configured to set and derive the chroma QP offset based on the result of decoding the coded data; a chroma QP deriving unit 104C configured to derive a chroma QP based on the chroma QP offset derived by the chroma QP offset deriving unit 104B; and a coding unit level chroma QP initialization unit 104D configured to initialize the chroma QP offset for each coding unit that is not recursively partitioned.

FIG. 3

**Description**

TECHNICAL FIELD

The present invention relates to an image decoding device, an image decoding method, and a program.

BACKGROUND ART

Conventionally, an image coding method using intra prediction or inter prediction, transform/quantization of a prediction residual signal, and entropy coding has been proposed (see, for example, Non Patent Literature 1).

Hereinafter, a coding unit division method in Versatile Video Coding (WC) Draft 7, which is a next-generation video coding method, and a chrominance intra prediction method in intra prediction will be described (see Non Patent Literature 2).

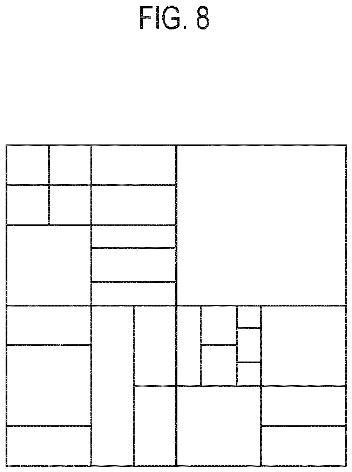

As illustrated in Fig. 8, coding units in both methods are recursively partitioned by using a quad tree, a binary tree, and a ternary tree. Here, the same division pattern may be selected (single tree) or different division patterns may be selected (dual tree) between a luminance component and a chrominance component.

Non Patent Literature 2 discloses a method for controlling a quantization parameter (QP) value of a chrominance block. The QP value of the chrominance block is derived by converting the QP value of the corresponding luminance block by using a correspondence table and adding an offset designated by an upper granularity represented by a picture, a slice, or a coding block. Further, the derived QP value of the chrominance block is used to determine a deblocking filter.

CITATION LIST

NON PATENT LITERATURE

Non Patent Literature 1: ITU-T H.265 High Efficiency Video Coding
Non Patent Literature 2: Versatile Video Coding (Draft 7)

SUMMARY OF INVENTION

TECHNICAL PROBLEM

However, the VVC Draft 7, which is a next-generation video coding method, has a problem that the QP value of the chrominance block is used in deblocking filter processing in the chrominance block, and such a QP value does not exist when there is no prediction residual signal.

Therefore, the present invention has been made in view of the above-described problems, and an object of the present invention is to provide an image decoding device, an image decoding method, and a program capable of improving deblocking filter performance for a block in which a coefficient is not coded, in determining a deblocking filter for a chrominance block.

Another object of the present invention is to provide an image decoding device, an image decoding method, and a program capable of improving deblocking filter performance for a block in which a coefficient is not coded and an immediately previous block in a decoding order since consistency is maintained in determining a deblocking filter for an adjacent chrominance block.

Another object of the present invention is to provide an image decoding device, an image decoding method, and a program capable of improving parallel processing functionality of a deblocking filter because parallelism is maintained in determining a deblocking filter for different chrominance blocks in parallel processing units.

SOLUTION TO PROBLEM

The first aspect of the present invention is summarized as an image decoding device configured to decode coded data, the image decoding device including: a chroma quantization parameter (QP) offset initialization unit configured to initialize a chroma QP offset based on a result of decoding the coded data; a chroma QP offset deriving unit configured to set and derive the chroma QP offset based on the result of decoding the coded data; a chroma QP deriving unit configured to derive a chroma QP based on the chroma QP offset derived by the chroma QP offset deriving unit; and a coding unit level chroma QP initialization unit configured to initialize the chroma QP offset for each coding unit that is not recursively partitioned.

The second aspect of the present invention is summarized as an image decoding method including: initializing a chroma QP offset based on a result of decoding coded data; setting and deriving the chroma QP offset based on the result of decoding the coded data; deriving a chroma QP based on the derived chroma QP offset; and initializing the chroma QP offset for each coding unit that is not recursively partitioned.

The third aspect of the present invention is summarized as a program that causes a computer to function as an image decoding device configured to decode coded data, the image decoding device including: a chroma QP offset initialization unit configured to initialize a chroma QP offset based on a result of decoding the coded data; a chroma QP offset deriving unit configured to set and derive the chroma QP offset based on the result of decoding the coded data; a chroma QP deriving unit configured to derive a chroma QP based on the chroma QP offset derived by the chroma QP offset deriving unit; and a coding unit level chroma QP initialization unit configured to initialize the chroma QP offset for each coding unit that is not recursively partitioned.

ADVANTAGEOUS EFFECTS OF INVENTION

According to the present invention, it is possible to provide an image decoding device, an image decoding method, and a program capable of improving deblocking filter performance for a block in which a coefficient is not coded, in determining a deblocking filter for a chrominance block.

Furthermore, according to the present invention, it is possible to provide an image decoding device, an image decoding method, and a program capable of improving deblocking filter performance for a block in which a coefficient is not coded and an immediately previous block in a decoding order since consistency is maintained in determining a deblocking filter for an adjacent chrominance block.

Furthermore, according to the present invention, it is possible to provide an image decoding device, an image decoding method, and a program capable of improving parallel processing functionality of a deblocking filter because parallelism is maintained in determining a deblocking filter for different chrominance blocks in parallel processing units.

BRIEF DESCRIPTION OF DRAWINGS

Fig. 1 is a diagram illustrating an example of a configuration of an image processing system 1 according to an embodiment.

Fig. 2 is a diagram illustrating an example of functional blocks of an image coding device 100 according to the embodiment.

Fig. 3 is a diagram illustrating an example of some functional blocks of an entropy coding unit 104 of the image coding device 100 and an entropy decoding unit 201 of an image decoding device 200 according to the embodiment.

Fig. 4 is a diagram illustrating an example of syntax indicating processing in a chroma QP offset initialization unit 104A of the entropy coding unit 104 of the image coding device 100 according to the embodiment.

Fig. 5 is a diagram illustrating an example of functional blocks of the image decoding device 200 according to the embodiment.

Fig. 6 is a flowchart illustrating an example of an operation of the entropy decoding unit 201 of the image decoding device 200 according to the embodiment.

Fig. 7 is a diagram illustrating an example of some functional blocks of an entropy coding unit 104 of an image coding device 100 and an entropy decoding unit 201 of an image decoding device 200 according to an embodiment.

Fig. 8 is a diagram for describing a conventional technique.

DESCRIPTION OF EMBODIMENTS

Hereinafter, embodiments of the present invention will be described with reference to the drawings. Note that components in the following embodiments can be replaced with existing components or the like as appropriate, and various variations including combinations with other existing components are possible. Therefore, the following description of the embodiments does not limit the contents of the invention described in the claims.

(First Embodiment)

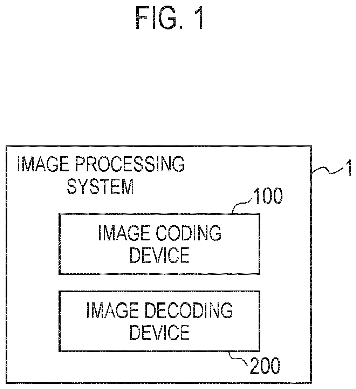

Fig. 1 is a diagram illustrating an example of functional blocks of an image processing system 1 according to a first embodiment of the present invention. The image processing system 1 includes an image coding device 100 that codes a video to generate coded data, and an image decoding device 200 that decodes the coded data generated by the image coding device 100. The above-described coded data is transmitted and received between the image coding device 100 and the image decoding device 200 via a transmission path, for example.

<Image Coding Device 100>

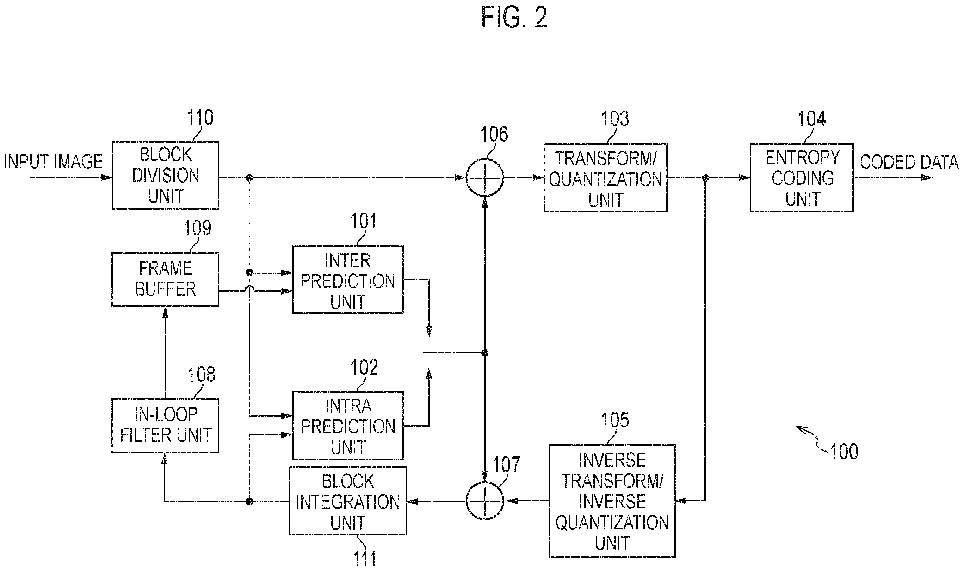

Fig. 2 is a diagram illustrating an example of functional blocks of the image coding device 100. As illustrated in Fig. 2, the image coding device 100 includes an inter-prediction unit 101, an intra-prediction unit 102, a transform/quantization unit 103, an entropy coding unit 104, an inverse transform/inverse quantization unit 105, a subtracting unit 106, an adding unit 107, an in-loop filter unit 108, a frame buffer 109, a block division unit 110, and a block integration unit 111.

The block division unit 110 is configured to divide an entire screen of an input image into the same squares, and output an image (divided image) obtained by recursive division using a quad tree or the like.

The inter-prediction unit 101 is configured to perform inter-prediction by using the divided image input by the block division unit 110 and a locally decoded image after filtering input from the frame buffer 109 to generate and output an inter-prediction image.

The intra-prediction unit 102 is configured to perform intra-prediction by using the divided image input by the block division unit 110 and a locally decoded image before filtering (described later) to generate and output an intra-prediction image.

The transform/quantization unit 103 is configured to execute orthogonal transform processing on a residual signal input from the subtracting unit 106, execute quantization processing on a transform coefficient obtained by the orthogonal transform processing, and output a quantized level value obtained by the quantization processing.

The entropy coding unit 104 is configured to perform entropy coding on the quantized level value, transform unit size, and transform size input from the transform/quantization unit 103 and output coded data.

The inverse transform/inverse quantization unit 105 is configured to execute inverse quantization processing on the quantized level value input from the transform/quantization unit 103, execute inverse orthogonal transform processing on a transform coefficient obtained by the inverse quantization processing, and output an inversely orthogonally transformed residual signal obtained by the inverse orthogonal transform processing.

The subtracting unit 106 is configured to output the residual signal that is a difference between the divided image input by the block division unit 110 and the intra-prediction image or the inter-prediction image.

The adding unit 107 is configured to output a divided image obtained by adding the inversely orthogonally transformed residual signal input from the inverse transform/inverse quantization unit 105 and the intra-prediction image or the inter-prediction image.

The block integration unit 111 is configured to output the locally decoded image before filtering obtained by integrating the divided images input from the adding unit 107.

The in-loop filter unit 108 is configured to apply in-loop filtering processing such as deblocking filter processing to the locally decoded image before filtering input from the block integration unit 111 to generate and output the locally decoded image after filtering. Here, the locally decoded image before filtering is a signal obtained by adding the residual signal subjected to the inverse orthogonal transform and the intra-prediction image or the inter-prediction image.

The frame buffer 109 accumulates the locally decoded image after filtering and appropriately supplies the locally decoded image after filtering to the inter-prediction unit 101 as the locally decoded image after filtering.

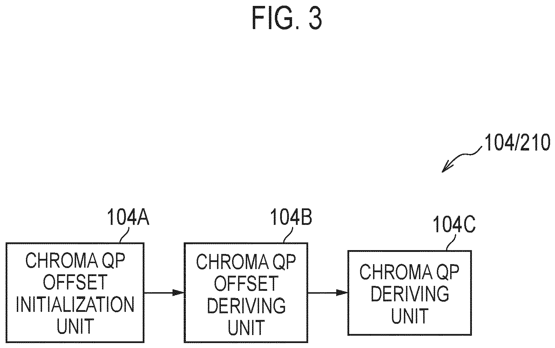

Hereinafter, the entropy coding unit 104 of the image coding device 100 according to the present embodiment will be described with reference to Fig. 3. Fig. 3 is a diagram illustrating an example of some functional blocks of the entropy coding unit 104 of the image coding device 100 according to the present embodiment.

As illustrated in Fig. 3, the entropy coding unit 104 of the image coding device 100 according to the present embodiment includes a chroma quantization parameter (QP) offset initialization unit 104A, a chroma QP offset deriving unit 104B, and a chroma QP deriving unit 104C.

The chroma QP offset initialization unit 104A is configured to receive a valid flag of an offset value and chroma QP division granularity.

Here, the chroma QP offset initialization unit 104A is configured to initialize a chroma QP offset based on the valid flag of the offset value and the input chroma QP division granularity that are input.

Specifically, the chroma QP offset initialization unit 104A is configured to reset (set to "0") and output the chroma QP offset in a case where the valid flag of the offset value is valid and the chroma QP division granularity is equal to or less than a predetermined value.

On the other hand, the chroma QP offset initialization unit 104A is configured to maintain and output the current chroma QP offset in a case where the valid flag of the offset value is not valid or in a case where the chroma QP division granularity is not equal to or less than the predetermined value.

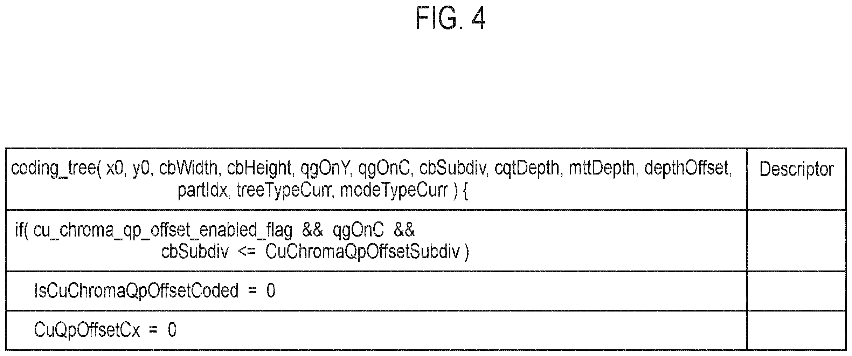

Fig. 4 illustrates syntax representing processing in the chroma QP offset initialization unit 104A.

Here, "cu_chroma_qp_offset_enabled_flag" indicates the above-described valid flag of the offset value, "qgOnC" indicates a valid flag of a control unit of quantization of a chrominance block, "cbSubdiv" indicates the above-described chroma QP division granularity, and "CuChromaQpOffsetSubdiv" indicates the above-described predetermined value.

"IsCuChromaQpOffsetCoded" indicates a flag indicating whether or not the chroma QP offset value is coded for a coding unit, and "CuChromaQpOffsetIdx" indicates the above-described chroma QP offset.

Note that, instead of CuChromaQpOffsetIdx, syntax corresponding to a chrominance coding method such as CuQpOffsetCb, CuQpOffsetCr, or CuQpOffsetCbCr may be used.

The chroma QP offset deriving unit 104B is configured to receive a chroma QP offset flag and a chroma QP offset index derived by a control unit (not illustrated) and the chroma QP offset initialized by the chroma QP offset initialization unit 104A.

Here, the chroma QP offset deriving unit 104B is configured to set and derive the chroma QP offset based on the input chroma QP offset flag, chroma QP offset index, and chroma QP offset.

Specifically, the chroma QP offset deriving unit 104B is configured to output a zero value as the derived chroma QP offset when the chroma QP offset flag is invalid.

On the other hand, the chroma QP offset deriving unit 104B is configured to output a value obtained by converting the chroma QP offset index by applying a chroma QP offset list, as the derived chroma QP offset when the chroma QP offset flag is valid.

The following (Equation 1) illustrates an example of processing in the chroma QP offset deriving unit 104B in a case where the chroma QP offset flag is valid.

$$\text{CuQpOffsetCx} = \text{cx\_qp\_offset\_list}[\text{CuChromaQpOffsetIdx}] \quad \ldots \quad (\text{Equation 1})$$

Note that Cx in the equation may be individually defined as Cb, Cr, or CbCr.

Here, "cx_qp_offset_list[ ]" indicates the chroma QP offset list.

The chroma QP deriving unit 104C is configured to receive a luma QP and the chroma QP offset.

Further, the chroma QP deriving unit 104C is configured to derive and output a chroma QP based on the input luma QP and chroma QP offset.

Specifically, the chroma QP deriving unit 104C is configured to derive the chroma QP by adding the chroma QP offset to a value obtained by converting the luma QP by applying a conversion table.

For example, the following (Equation 2) to (Equation 4) show an example of processing in the chroma QP deriving unit 104C.

$$qP_{chroma} = \text{Clip3}(-\text{QpBdOffset}, 63, Qp_y) \quad \ldots \quad (\text{Equation 2})$$

$$qP_{Cx} = \text{ChromaQpTable}[i][qP_{chroma}] \quad \ldots \quad (\text{Equation 3})$$

$$Qp'_{cx} = \text{Clip3}(-\text{QpBdOffset}, 63, Qp_{cx} + \text{pps\_cx\_qp\_offset} + \text{slice\_cx\_qp\_offset} + \text{CuQpOffsetCx}) + \text{QpBdOffset} \quad \ldots \quad (\text{Equation 4})$$

Note that Cx in the equation may be individually defined as Cb, Cr, or CbCr.

Here, "QpBdOffset" indicates an offset of a quantization parameter range, "$Qp_y$" indicates the luma QP before applying the offset of the quantization parameter range, "ChromaQpTable" indicates a table for conversion from the luma QP according to the chrominance coding method to the chroma quantization parameter, "i" indicates the type of the chrominance coding method, "pps_cx_qp_offset" indicates an offset from the luma QP of each picture to the chroma quantization parameter, and "slice_cx_qp_offset" indicates a value added to pps_cx_qp_offset of each slice.

<Image Decoding Device 200>

The entropy decoding unit 201 is configured to perform entropy decoding on the coded data and output the quantized level value, a motion compensation method generated by the image coding device 100, and the like.

The inverse transform/inverse quantization unit 202 is configured to execute inverse quantization processing on the quantized level value input from the entropy decoding unit 201, execute inverse orthogonal transform processing on a result obtained by performing the inverse quantization processing, and output the result as the residual signal.

The inter-prediction unit 203 is configured to perform inter-prediction by using a locally decoded image after filtering input from the frame buffer 207 to generate and output an inter-prediction image.

The intra-prediction unit 204 is configured to perform intra-prediction by using a locally decoded image before filtering input from the adding unit 205 to generate and output an intra predicted image.

The adding unit 205 is configured to output a divided image obtained by adding the residual signal input from the inverse trans form/inverse quantization unit 202 and the prediction image (the inter-prediction image input from the inter-prediction unit 203 or the intra-prediction image input from the intra-prediction unit 204).

Here, the prediction image is a prediction image calculated by a prediction method obtained by entropy decoding among the inter-prediction image input from the inter-prediction unit 203 and the intra-prediction image input from the intra-prediction unit 204.

The block integration unit 208 is configured to output the locally decoded image before filtering obtained by integrating the divided images input from the adding unit 205.

The in-loop filter unit 206 is configured to apply in-loop filtering processing such as deblocking filtering processing to the locally decoded image before filtering input from the block integration unit 208 to generate and output the locally decoded image after filtering.

The frame buffer 207 is configured to accumulate the locally decoded image after filtering input from the in-loop filter 206, appropriately supply the locally decoded image after filtering to the inter-prediction unit 203 as the locally decoded image after filtering, and output the locally decoded image after filtering as a decoded image.

Hereinafter, the entropy decoding unit 201 of the image decoding device 200 according to the present embodiment will be described with reference to Fig. 3.

Specifically, similarly to the entropy coding unit 104 of the image coding device 100 illustrated in Fig. 3, the entropy decoding unit 201 includes a chroma QP offset initialization unit 104A, a chroma QP offset deriving unit 104B, and a chroma QP deriving unit 104C.

Here, the chroma QP offset initialization unit 104A is configured to initialize the chroma QP offset based on a result of decoding the coded data.

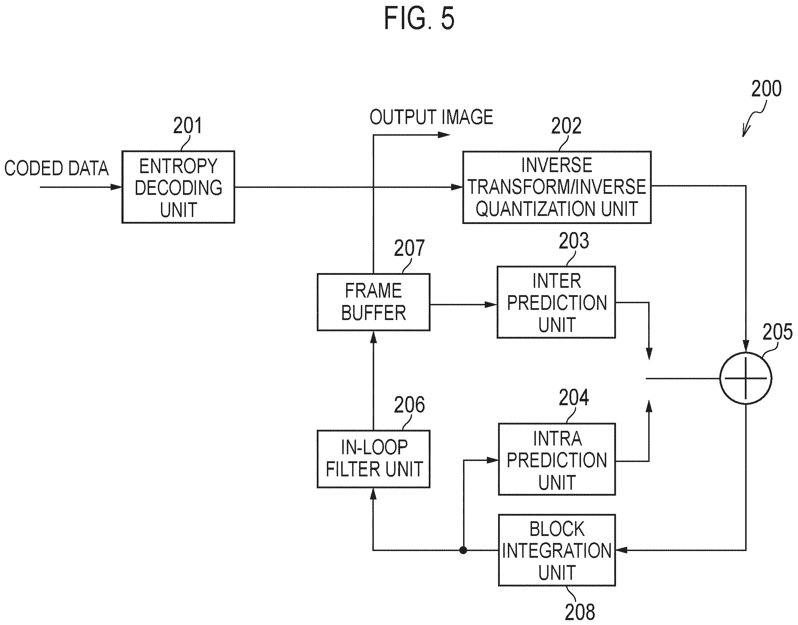

Hereinafter, an example of an operation of the entropy decoding unit 201 according to the present embodiment will be described with reference to Fig. 5.

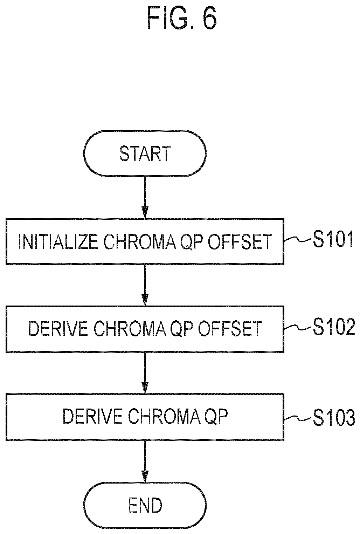

As illustrated in Fig. 6, in Step S101, the entropy decoding unit 201 initializes the chroma QP offset based on the result of decoding the coded data transmitted from the image coding device 100.

Specifically, the entropy decoding unit 201 is configured to initialize the chroma QP offset based on the valid flag of the offset value and the chroma QP division granularity that are input.

In Step S102, the entropy decoding unit 201 sets and derives the chroma QP offset based on the result of decoding the coded data.

Specifically, the entropy decoding unit 201 sets and derives the chroma QP offset based on the chroma QP offset flag and the chroma QP offset index which are the result of decoding the coded data and the initialized chroma QP offset.

In Step S103, the entropy decoding unit 201 derives the chroma QP based on the derived chroma QP offset.

Specifically, the entropy decoding unit 201 derives and outputs the chroma QP based on the luma QP (not illustrated) and the derived chroma QP offset.

With the image processing system 1 according to the present embodiment, in the determination of the deblocking filter for the chrominance block, the deblocking filter performance for the block in which the coefficient is not coded can be improved.

Specifically, the QP value is required to determine the deblocking filter, but in the VVC Draft 7, there is a case where the QP offset of the block with no coefficient is not defined, the QP value becomes undefined, and the deblocking filter cannot be determined. Alternatively, in the VVC Draft 7, in a case where the QP offset of the block with no coefficient is not defined, when the QP value that seems to be appropriate is derived, the determination of the deblocking filter becomes inaccurate, and the performance is degraded.

Therefore, the image processing system 1 according to the present embodiment generally improves the determination of deblocking, and as a result, the performance can be improved.

(Second Embodiment)

Hereinafter, an image processing system 1 according to a second embodiment of the present invention will be described focusing on differences from the image processing system 1 according to the first embodiment described above.

In the present embodiment, a chroma QP offset initialization unit 104A is configured to set the chroma QP offset set in the immediately previous chrominance block in the decoding order in the initialization of the chroma QP offset in a case where the valid flag of the offset value is valid and the chroma QP division granularity is equal to or less than the predetermined value.

With the image processing system 2 according to the present embodiment, in the determination of the deblocking filter for the chrominance block, it is possible to improve the deblocking filter performance for the block in which the coefficient is not coded and the immediately previous block in the decoding order.

(Third Embodiment)

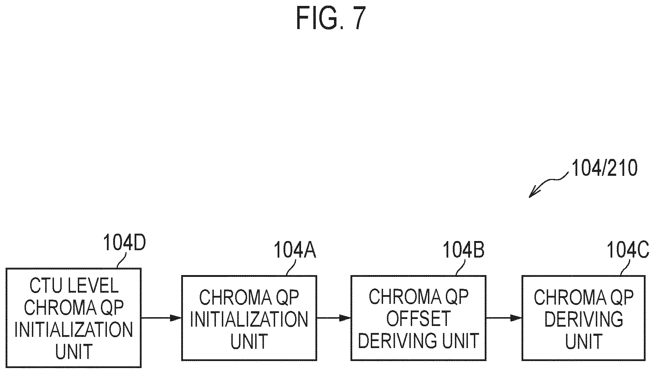

Hereinafter, an image processing system 1 according to a third embodiment of the present invention will be described focusing on differences from the above-described image processing system 1 according to the first embodiment with reference to Fig. 7.

As illustrated in Fig. 7, in the present embodiment, the entropy coding unit 104 of the image coding device 100 and the entropy decoding unit 201 of the image decoding device 200 include a CTU level chroma QP initialization unit 104D in addition to the configuration illustrated in Fig. 3.

The CTU level chroma QP initialization unit 104D and the chroma QP offset initialization unit 104A have different granularity in initializing the chroma QP offset.

The CTU level chroma QP initialization unit 104D is configured to initialize the chroma QP offset for each CTU (that is, a coding unit that is not recursively partitioned) .

Specifically, the CTU level chroma QP initialization unit 104D is configured to reset and output the chroma QP offset for each CTU regardless of the input in the initialization for each CTU.

Here, a CTU level may be a unit serving as a start point of recursive partition.

Note that the CTU level chroma QP initialization unit 104D may be configured to initialize the chroma QP offset not for each CTU but for each CTU line, for each title, for each slice, or for each picture.

In a case of initializing the chroma QP offset for each CTU line, the CTU level chroma QP initialization unit 104D may associate the chroma QP offset with an entropy coding synchronization enabling flag (entropy_coding_sync_flag).

With the image processing system 3 according to the present embodiment, the parallel processing functionality of the deblocking filter can be improved in the determination of the deblocking filter for the different chrominance blocks in parallel processing units.

The image coding device 100 and the image decoding device 200 described above may be implemented as programs that cause a computer to execute respective functions (respective steps).

Note that the above described embodiments have been described by taking application of the present invention to the image encoding device 10 and the image decoding device 30 as examples. However, the present invention is not limited only thereto, but can be similarly applied to an encoding/decoding system having functions of the image encoding device 10 and the image decoding device 30.

REFERENCE SIGNS LIST

    1 Image processing system
    100 Image coding device
    101, 203 Inter prediction unit
    102, 204 Intra prediction unit
    103 Transform/quantization unit
    104 Entropy coding unit
    104A Chroma QP offset initialization unit
    104B Chroma QP offset deriving unit
    104C Chroma QP deriving unit
    104D CTU level chroma QP initialization unit
    105, 202 Inverse transform/inverse quantization unit
    106 Subtracting unit
    107, 205 Adding unit
    108, 206 In-loop filter unit
    109, 207 Frame buffer
    110 Block division unit
    111, 208 Block integration unit
    200 Image decoding device
    201 Entropy decoding unit

**Claims**

1. An image decoding device configured to decode coded data, the image decoding device comprising:

   a chroma quantization parameter (QP) offset initialization unit configured to initialize a chroma QP offset based on a result of decoding the coded data;
   a chroma QP offset deriving unit configured to set and derive the chroma QP offset based on the result of decoding the coded data;
   a chroma QP deriving unit configured to derive a chroma QP based on the chroma QP offset derived by the chroma QP offset deriving unit; and
   a coding unit level chroma QP initialization unit configured to initialize the chroma QP offset for each coding unit that is not recursively partitioned.

2. An image decoding method comprising:

   initializing a chroma QP offset based on a result of decoding coded data;
   setting and deriving the chroma QP offset based on the result of decoding the coded data;
   deriving a chroma QP based on the derived chroma QP offset; and
   initializing the chroma QP offset for each coding unit that is not recursively partitioned.

3. A program that causes a computer to function as an image decoding device configured to decode coded data, the image decoding device including:

   a chroma QP offset initialization unit configured to initialize a chroma QP offset based on a result of decoding the coded data;
   a chroma QP offset deriving unit configured to set and derive the chroma QP offset based on the result of decoding the coded data;
   a chroma QP deriving unit configured to derive a chroma QP based on the chroma QP offset derived by the chroma QP offset deriving unit; and
   a coding unit level chroma QP initialization unit configured to initialize the chroma QP offset for each coding unit that is not recursively partitioned.

# FIG. 1

IMAGE PROCESSING
SYSTEM

1

IMAGE CODING
DEVICE

100

IMAGE DECODING
DEVICE

200

FIG. 2

EP 4 002 849 A1

# FIG. 3

104/210

| 104A | 104B | 104C |
|---|---|---|
| CHROMA QP OFFSET INITIALIZATION UNIT | CHROMA QP OFFSET DERIVING UNIT | CHROMA QP DERIVING UNIT |

EP 4 002 849 A1

# FIG. 4

| coding_tree( x0, y0, cbWidth, cbHeight, qgOnY, qgOnC, cbSubdiv, cqtDepth, mttDepth, depthOffset, partIdx, treeTypeCurr, modeTypeCurr ) { | Descriptor |
|---|---|
| if( cu_chroma_qp_offset_enabled_flag && qgOnC && <br> cbSubdiv <= CuChromaQpOffsetSubdiv ) | |
| IsCuChromaQpOffsetCoded = 0 | |
| CuQpOffsetCx = 0 | |

# FIG. 5

EP 4 002 849 A1

# FIG. 6

```
        ┌─────────────┐
        │    START    │
        └─────────────┘
               │
               ▼
┌──────────────────────────────┐
│ INITIALIZE CHROMA QP OFFSET  │─────S101
└──────────────────────────────┘
               │
               ▼
┌──────────────────────────────┐
│   DERIVE CHROMA QP OFFSET    │─────S102
└──────────────────────────────┘
               │
               ▼
┌──────────────────────────────┐
│       DERIVE CHROMA QP       │─────S103
└──────────────────────────────┘
               │
               ▼
        ┌─────────────┐
        │     END     │
        └─────────────┘
```

# FIG. 7

104/210

| 104D | 104A | 104B | 104C |
|---|---|---|---|
| CTU LEVEL CHROMA QP INITIALIZATION UNIT | CHROMA QP INITIALIZATION UNIT | CHROMA QP OFFSET DERIVING UNIT | CHROMA QP DERIVING UNIT |

# FIG. 8

## INTERNATIONAL SEARCH REPORT

| International application No. |
| --- |
| PCT/JP2020/043745 |

A. CLASSIFICATION OF SUBJECT MATTER
H04N 19/70(2014.01)i
FI: H04N19/70
According to International Patent Classification (IPC) or to both national classification and IPC

B. FIELDS SEARCHED

Minimum documentation searched (classification system followed by classification symbols)
H04N19/00-19/98

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | US 2015/0071344 A1 (APPLE INC.) 12 March 2015 (2015-03-12) paragraphs [0035]-[0081], fig. 1-7 | 1-3 |
| A | FLYNN, David et al., RExt: CU-adaptive chroma QP offsets, Joint Collaborative Team on Video Coding (JCT-VC) of ITU-T SG16 WP3 and ISO/IEC JTC1/SC29/WG11, JCTVC-O0044, 15th Meeting: Geneva, CH, October 2013, pp. 1-4, 2 Method, 3 Encoder implementations | 1-3 |
| P, X | KAWAMURA, Kei and Naito, Sei, Initializations and propagation of Chroma QP Offset, Joint Video Experts Team (JVET) of ITU-T SG 16 WP 3 and ISO/IEC JTC 1/SC 29/WG 11, JVET-Q0126_r1, 17th Meeting: Brussels, BE, January 2020, pp. 1-5, 2 Proposed solutions, 4 Specification text changes for solution 3 | 1-3 |

☒ Further documents are listed in the continuation of Box C.     ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 February 2021 (10.02.2021) | 22 February 2021 (22.02.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

<div align="center">

**INTERNATIONAL SEARCH REPORT**

</div>

| | International application No. |
|---|---|
| | PCT/JP2020/043745 |

C (Continuation).　DOCUMENTS CONSIDERED TO BE RELEVANT

| Category* | Citation of document, with indication, where appropriate, of the relevant passages | Relevant to claim No. |
|---|---|---|
| P, X | Heng, Brian, ZHOU, Minhua, and WAN, Wade, AHG16: On Propagation of Chroma CU QP Offsets, 17th Meeting: Brussels, BE, JVET-Q0267-v1, 17th Meeting: Brussels, BE, 31 December 2019, pp. 1-5, 1 Introduction, 2 Proposal | 1-3 |
| P, X | RAMASUBRAMONIAN, Adarsh K. et al., On chroma QP offsets for zero-CBF leading chroma coding blocks, Joint Video Experts Team (JVET) of ITU-T SG 16 WP 3 and ISO/IEC JTC 1/SC 29/WG 11, JVET-Q0476, 17th Meeting: Brussels, January 2020, pp. 1-3, 1 Introduction, 2 Proposal | 1-3 |
| P, X | LAGRANGE, Philippe de, AHG15: reset chroma QP offsets when starting a CTU, Joint Video Experts Team (JVET) of ITU-T SG 16 WP 3 and ISO/IEC JTC 1/SC 29/ WG 11, JVET-Q0570-v3, 17th Meeting: Brussels, BE, January 2020, pp. 1-4, 1 Problem statement, 2 Proposal | 1-3 |

Form PCT/ISA/210 (continuation of second sheet) (January 2015)

**INTERNATIONAL SEARCH REPORT**
Information on patent family members

| International application No. |
|---|
| PCT/JP2020/043745 |

| Patent Documents referred in the Report | Publication Date | Patent Family | Publication Date |
|---|---|---|---|
| US 2015/0071344 A1 | 12 Mar. 2015 | WO 2015/035092 A2<br>CN 104427339 A<br>JP 2015-53680 A<br>AU 2014216004 A<br>EP 2854404 A2<br>TW 201524193 A<br>AU 2016200770 A<br>KR 10-2016-0040709 A | |

Form PCT/ISA/210 (patent family annex) (January 2015)